# EUROPÄISCHE PATENTANMELDUNG

(11) **EP 4 789 789 A1**
(43) Veröffentlichungstag der Anmeldung: **12.08.2026**
(21) Anmeldenummer: 26156308.4
(22) Anmeldetag: 04.02.2026
(51) Int. Cl.: B21B 1/24

(54) **VERFAHREN ZUM HERSTELLEN EINER DRESSIERWALZE, DRESSIERWALZE SOWIE VERFAHREN ZUM DRESSIEREN EINES SCHMELZTAUCHBESCHICHTETEN STAHLBANDS**

(30) Priorität: 11.02.2025 DE 102025104918
(71) Anmelder: ThyssenKrupp Steel Europe AG, 47166 Duisburg (DE)
(72) Erfinder: Lauer, Benjamin, 47166 Duisburg (DE); Junge, Dr. Fabian, 47166 Duisburg (DE); Wischmann, Stefan, 47166 Duisburg (DE)
(74) Vertreter: ThyssenKrupp Steel Europe AG

(57) **Zusammenfassung**

Die Erfindung betrifft ein Verfahren zum Herstellen einer Dressierwalze, eine Dressierwalze sowie ein Verfahren zum Dressieren eines schmelztauchbeschichteten Stahlbands.

## Beschreibung

Die Erfindung betrifft ein Verfahren zum Herstellen einer Dressierwalze, eine Dressierwalze sowie ein Verfahren zum Dressieren eines schmelztauchbeschichteten Stahlbands.

Im Stand der Technik werden für die Stahlproduktion Walzen mit einer EDT-Oberfläche eingesetzt, welche stochastische Strukturen aufweisen, um die Oberflächeneigenschafen der Stahlfeinbleche einzustellen. Hierbei sind die arithmetische Mittenrauheit Ra und Spitzenzahl RPc gekoppelt. Eine höhere arithmetische Mittenrauheit führt zu einer geringeren Spitzenzahl. Dies steht im Widerspruch zu den allgemeinen Anforderungen der Automobilbauer. Hierdurch ist der nutzbare Parameterraum deutlich eingeschränkt.

Durch nicht-stochastische sogenannte deterministische Strukturen, welche insbesondere durch Lasertexturierung in die Walzen eingebracht werden können, können diese Parameter frei eingestellt werden. Deterministische Strukturen haben den Nachteil, dass sie empfindlich auf optische Störungen bzw. Oberflächenfehler reagieren. Geringste Änderungen in einem regelmäßigen Muster (deterministische Struktur) werden vom menschlichen Auge als Fehler und störend wahrgenommen. Bei einer zufälligen Verteilung, z. B. Rauschen, können solche Fehler nicht wahrgenommen werden.

Verfahren zum Herstellen von lasertexturierten Walzen, insbesondere mit einer zufälligen (stochastischen) Textur, sind beispielhaft in der EP 2 294 178 B1 und in der JP 2004-106015 A beschrieben. Des Weiteren ist ein gattungsgemäßes Verfahren zum Texturieren von Dressierwalzenoberflächen aus der DE 10 2020 107 858 A1 bekannt.

Aufgabe der vorliegenden Erfindung ist es, ein Verfahren zum Herstellen einer Dressierwalze anzugeben, mit welchem ein Parameterraum umfassend Topografie-Kennwerte wie arithmetische Mittenrauheit Ra und Spitzenzahl RPc deutlich erweitert werden kann. Des Weiteren ist es Aufgabe der vorliegenden Erfindung, eine Dressierwalze und ein Verfahren zum Dressieren eines schmelztauchbeschichteten Stahlbands anzugeben, mit welcher/welchem eine vorteilhafte Oberfläche für die Herstellung von Fahrzeugbauteilen bereitgestellt gestellt werden kann.

Diese Aufgabe zum Herstellen einer Dressierwalze wird gelöst durch ein Verfahren mit den Merkmalen des Anspruchs 1, für eine Dressierwalze wird gelöst durch die Merkmale des Anspruchs 8 und zum Dressieren eines schmelztauchbeschichteten Stahlbands wird gelöst durch ein Verfahren mit den Merkmalen des Anspruchs 9. Weiterführende Ausgestaltungen sind in den Unteransprüchen beschrieben.

Die erste Lehre betrifft ein Verfahren zum Herstellen einer Dressierwalze, wobei die Dressierwalze in einer Dreheinrichtung eingespannt und mit einer Drehgeschwindigkeit w in Rotation versetzt wird, wobei eine zu bearbeitende Oberfläche der Dressierwalze während der Rotation über mindestens einen gepulsten Laser oder eine Optik gekoppelt mit einem gepulsten Laser mittels Laserpulsen bearbeitet wird, wobei der Laser mit einer Repetitionsrate f, mit einer maximalen Laserleistung P, mit einem Pulsradius r und einer Pulsdauer t betrieben wird, wobei die Laserpulse überlappend auf die Oberfläche gerichtet werden und dadurch einander überlappende näpfchenförmige Vertiefungen in der Oberfläche erzeugt werden, wobei die Laserpulse einen Pulsabstand d zwischen 0,6 und 1,4 eines Pulsradius r aufweisen, wobei der Laser mittels eines Prozessrechners gesteuert und/oder geregelt wird, wobei auf der Oberfläche der Dressierwalze eine stochastische Struktur erzeugt wird.

Zur Bearbeitung der Oberfläche der Dressierwalze wird beispielsweise eine Schmelzdynamik während der Laserbearbeitung ausgenutzt. Dies steht im Gegensatz zum sogenannten Laserpolieren, bei welchem ein konstanter Schmelzfilm erzeugt wird, welcher die Oberfläche einglättet und damit Einfluss auf die arithmetische Mittenrauheit Ra nimmt, diese insbesondere dadurch senkt. Die Bearbeitung mittels Laser ist ein Ablationsprozess, bei welchem der dabei entstehende Dampfdruck ausgenutzt wird, um "Unruhe" in die Schmelze zu bringen. Dies kann zu einer gezielten arithmetischen Mittenrauheit führen. Über die maximale Laserleistung P in Zusammenhang mit dem Pulsradius r kann die Stärke der Ablation und somit die Schmelzmenge und der resultierende Dampfdruck eingestellt werden. Mit der Pulsdauer t des Lasers kann das Verhältnis von Schmelze zu verdampftem Material und somit die Stärke des Dampfdrucks und die Eindringtiefe der Schmelze eingestellt werden. Während der Bearbeitung können der Punkt-zu-Punkt-Abstand (Pitch) und der Linienabstand sowie die Pulsdauer des Lasers konstant gehalten. Durch eine konstante Pulsdauer kann die Komplexität des Systems vorzugsweise gering gehalten werden und ein handelsüblicher gepulster Laser zum Einsatz kommen. Diese Laser weisen typischerweise eine konstante Repetitionsrate auf. Eine Kombination aus Drehgeschwindigkeit w und Repetitionsrate f ergibt einen vorzugsweise konstanten Pitch auf der Oberfläche. Dies unterliegt im Wesentlichen einer natürlichen Schwankung in der Drehgeschwindigkeit der Dressierwalzen und ist für diese Anwendung insbesondere zu vernachlässigen. Der Linienabstand in Achsrichtung ergibt sich durch die Verfahrgeschwindigkeit v des Lasers oder der mit dem Laser gekoppelten Optik. Die Verfahrgeschwindigkeit wird bevorzugt während der Bearbeitung konstant eingestellt. Besonders bevorzugt sind Pitch und Linienabstand gleich.

Mit einer Punktdichte, welche sich aus der Kombination Pitch und Linienabstand ergibt, kann eine Wärmeakkumulation erzeugt werden, welche die Wärmeeindringtiefe erhöhen und somit wiederum die Menge an Schmelze und Dampfdruck beeinflussen kann.

Gemäß einer Ausgestaltung wird die zu bearbeitende Oberfläche der Dressierwalze als abgewickelte Fläche betrachtet. Aus Pitch und Linienabstand, welcher beispielsweise dem Pulsabstands entsprechen kann, ergibt sich eine Pixelmuster für die Laserbearbeitung. Jedes Pixel stellt einen Laserschuss und die damit verbundene Pulsenergie dar. Die Pulsenergie wird anlagenbedingt auch in Stufen eingeteilt. Typischerweise werden 8 bit (256 Werte) verwendet, wobei in Einzelfällen auch 16 bit oder bei Bedarf auch mehr als 16 bit verwendet werden können. Das Pixelmuster kann mit einem festen Wert oder einer Normalverteilung und mindestens einer Gaußkurve oder mit einer Gleichverteilung nummerisch generiert werden und das damit generierte Pixelmuster in einem Prozessrechner zur Regelung und/oder Steuerung des Lasers zur Bearbeitung der Oberfläche der Dressierwalze implementiert werden. Unter einem festen Wert ist beispielhaft zu verstehen, dass jedes Pixel mit einer konstanten Pulsenergie generiert werden kann.

Es ist bekannt, Zufallsgeneratoren einzusetzen, mit welchen ein zufälliges sozusagen stochastisches Muster nummerisch generiert werden kann. Entsprechende Programme sind auf dem Markt erhältlich, beispielsweise Matlab. In dem Programm kann insbesondere die zu bearbeitende Oberfläche einer Dressierwalze in eine abgewickelte Fläche überführt werden und diese in n x m Pixel aufgeteilt werden. Somit wird die abgewickelte Fläche in n Pixel pro Zeile und m Pixel pro Spalte aufgeteilt bzw. unterteilt, mit n und m als ganze Zahlen. n und m können auch gleich sein. Jedes Pixel wird vorzugsweise gleich groß gewählt oder kann beispielsweise je nach abgewickelter Fläche respektive Oberfläche variieren.

Durch eine gezielte Einstellung der vorgenannten Parameter am Laser mittels der Regelung und/oder Steuerung lassen sich Topografie-Kennwerte Ra und Spitzenzahl RPc auf der Oberfläche der Dressierwalze gezielt bzw. positiv beeinflussen.

Gemäß einer Ausgestaltung kann das Pixelmuster normalverteilt mit mindestens zwei Gaußkurven nummerisch generiert werden. Normalerweise werden in einem Programm jeweils ein Pixelmuster normalverteilt mit einer Gaußkurve nummerisch generiert. Es können beispielsweise mindestens zwei Pixelmuster jeweils normalverteilt mit jeweils einer Gaußkurve nummerisch generiert und diese beiden voneinander unterschiedlichen Pixelmuster kombiniert werden, das heißt beispielsweise, dass die geraden Zahlen der Pixel im Pixelmuster 1 weiterverwertet und die ungeraden Zahlen der Pixel im Pixelmuster 1 verworfen werden und die ungeraden Zahlen der Pixel im Pixelmuster 2 weiterverwertet und die geraden Zahlen der Pixel im Pixelmuster 2 verworfen werden, um aus der Kombination aus Pixelmuster 1 und 2 ein "neues" Pixelmuster zu generieren. Mithin kann durch Kombination aus zwei Pixelmuster durch abwechselndes Zusammenlegen der einzelnen Pixel ein "neues" Pixelmuster erzeugt werden. Vorzugsweise werden Pixelmuster normalverteilt mit (genau) zwei Gaußkurven nummerisch generiert. Hier kann gezielt Einfluss genommen werden auf die Topografiewerte, und insbesondere höhere Ra, beispielsweise größer als 3,0 µm, vorzugsweise größer als 4,0 µm, bevorzugt größer als 5,0 µm und niedrigere RPc, beispielsweise weniger als 100 1/cm, vorzugsweise weniger als 80 1/cm, bevorzugt weniger als 60 1/cm, eingestellt werden.

Gemäß einer Ausgestaltung kann eine Repetitionsrate f zwischen 10 und 8000 kHz verwendet oder eingestellt wird. Insbesondere kann die Repetitionsrate f zwischen 50 und 2000 kHz betragen.

Gemäß einer Ausgestaltung kann eine maximale Laserleistung P zwischen 10 und 1000 W verwendet oder eingestellt werden. Die maximale Laserleistung kann insbesondere mindestens 15 W, vorzugsweise mindestens 20 W betragen. Die maximale Laserleistung kann insbesondere maximal 700 W, vorzugsweise maximal 300 W betragen. Bevorzugt kann die Pulsenergie variiert werden, um in Abhängigkeit von der maximalen Laserleistung den Abtrag zu regeln.

Gemäß einer Ausgestaltung kann ein Pulsradius r zwischen 10 und 80 µm verwendet oder eingestellt werden. Der Pulsradius kann insbesondere mindestens 12 µm betragen. Der Pulsradius kann insbesondere maximal 65 µm, vorzugsweise maximal 55 µm betragen.

Gemäß einer Ausgestaltung kann eine Pulsdauer t zwischen 300 fs und 500 ns verwendet oder eingestellt werden.

Ein Abstand L zwischen 20 und 300 mm kann verwendet oder eingestellt werden.

Eine Drehgeschwindigkeit w entspricht typischerweise dem Produkt aus Pitch und Repetitionsrate.

Eine Verfahrgeschwindigkeit v ergibt sich insbesondere in Abhängigkeit aus Drehgeschwindigkeit, Linienabstand und Walzenumfang.

Die zweite Lehre der Erfindung betrifft eine Dressierwalze mit einer laserbearbeiteten stochastischen Textur auf der Oberfläche, vorzugsweise hergestellt nach der ersten Lehre, wobei die Oberfläche der Dressierwalze eine Topografie mit einer arithmetischen Mittenrauheit Ra zwischen 0,8 und 8,0 µm und mit einer Spitzenzahl RPc zwischen 30 und 250 1/cm, wobei Ra und RPc nach DIN EN 10049:2014-03 ermittelt werden, aufweist.

Die Oberfläche der Dressierwalze kann einen Ra insbesondere von mindestens 0,9, 1,0, 1,1, 1,2 µm, vorzugsweise von mindestens 1,3, 1,4, 1,5, 1,6 µm, bevorzugt von mindestens 1,7, 1,8, 1,9, 2,0 µm, besonders bevorzugt von mindestens 2,2, 2,5, 2,7, 3,0 µm, weiter bevorzugt von mindestens 3,5, 4,0, 4,5, 5,0 µm aufweisen.

Die Oberfläche der Dressierwalze kann gemäß einer Ausgestaltung eine RPc von mindestens 30 1/cm und insbesondere maximal 240, 230, 220, 210 1/cm, vorzugsweise maximal 200, 190, 180, 170 1/cm, bevorzugt maximal 160, 150, 140, 130 1/cm, besonders bevorzugt maximal 120, 110, 100, 90 1/cm, weiter bevorzugt maximal 80, 70, 60, 50 1/cm aufweisen.

Die Oberfläche der Dressierwalze kann gemäß einer alternativen Ausgestaltung eine RPc von maximal 250 1/cm und insbesondere mindestens 55, 60, 65, 70 1/cm, vorzugsweise mindestens 75, 80, 85, 90 1/cm, bevorzugt mindestens 95,100, 105, 110 1/cm, besonders bevorzugt mindestens 115, 120, 125, 130 1/cm, weiter bevorzugt mindestens 135, 140, 145, 150 1/cm aufweisen.

Gemäß einer Ausgestaltung kann die Oberfläche der Dressierwalze einen Ra insbesondere von mindestens 0,9, 1,0, 1,1, 1,2 µm, vorzugsweise von mindestens 1,3, 1,4, 1,5, 1,6 µm, bevorzugt von mindestens 1,7, 1,8, 1,9, 2,0 µm, besonders bevorzugt von mindestens 2,2, 2,5, 2,7, 3,0 µm, weiter bevorzugt von mindestens 3,5, 4,0, 4,5, 5,0 µm und eine RPc von mindestens 30 1/cm und insbesondere maximal 240, 230, 220, 210 1/cm, vorzugsweise maximal 200, 190, 180, 170 1/cm, bevorzugt maximal 160, 150, 140, 130 1/cm, besonders bevorzugt maximal 120, 110, 100, 90 1/cm, weiter bevorzugt maximal 80, 70, 60, 50 1/cm aufweisen.

Gemäß einer alternativen Ausgestaltung kann die Oberfläche der Dressierwalze einen Ra insbesondere von mindestens 0,9, 1,0, 1,1, 1,2 µm, vorzugsweise von mindestens 1,3, 1,4, 1,5 1,6 µm, bevorzugt von mindestens 1,7, 1,8, 1,9, 2,0 µm, besonders bevorzugt von mindestens 2,2, 2,5, 2,7, 3,0 µm, weiter bevorzugt von mindestens 3,5, 4,0, 4,5, 5,0 µm und eine RPc von maximal 250 1/cm und insbesondere mindestens 55, 60, 65, 70 1/cm, vorzugsweise mindestens 75, 80, 85, 90 1/cm, bevorzugt mindestens 95,100, 105, 110 1/cm, besonders bevorzugt mindestens 115, 120, 125, 130 1/cm, weiter bevorzugt mindestens 135, 140, 145, 150 1/cm aufweisen.

Die dritte Lehre der Erfindung betrifft ein Verfahren zum Dressieren eines schmelztauchbeschichteten Stahlbands, wobei das schmelztauchbeschichtete Stahlband zwischen zwei einen Dressierspalt aufweisende Dressierwalzen mit einer stochastischen Textur hindurchgeführt und dadurch dressiert wird, wobei mindestens eine Dressierwalze nach der zweiten Lehre eingesetzt wird, und insbesondere nach der ersten Lehre hergestellt ist.

Vorzugsweise entsprechen beide Dressierwalzen der zweiten Lehre und sind insbesondere gemäß der ersten Lehre hergestellt.

Um Wiederholungen zu vermeiden, werden auf die Ausführungen zur ersten und zweiten Lehre verwiesen.

Gemäß einer Ausgestaltung umfasst das Stahlblech einen zinkbasierten Überzug. Dabei können im Überzug neben Zink und unvermeidbaren Verunreinigungen zusätzliche Elemente wie Aluminium mit einem Gehalt bis zu 8 Gew.-%, insbesondere bis zu 5 Gew.-% und/oder Magnesium mit einem Gehalt bis zu 8 Gew.-%, insbesondere bis zu 5 Gew.-% in dem Überzug enthalten sein. Stahlbleche mit zinkbasiertem Überzug weisen einen sehr guten kathodischen Korrosionsschutz auf, welche seit Jahren im Automobilbau eingesetzt werden. Ist ein verbesserter Korrosionsschutz vorgesehen, weist der Überzug zusätzlich Magnesium mit einem Gehalt von mindestens 0,3 Gew.-%, insbesondere von mindestens 0,6 Gew.-%, vorzugsweise von mindestens 0,9 Gew.-% auf. Aluminium kann alternativ oder zusätzlich zu Magnesium mit einem Gehalt von mindestens 0,1 Gew.-%, insbesondere von mindestens 0,3 Gew.-% vorhanden sein, um beispielsweise eine Anbindung des Überzugs an das Stahlblech zu verbessern und insbesondere eine Diffusion von Eisen aus dem Stahlblech in den Überzug bei einer Wärmebehandlung des beschichteten Stahlblechs im Wesentlichen zu vermeiden, damit beispielsweise eine gute Klebeignung gewährleistet werden kann. Dabei kann eine Dicke des Überzugs je Seite zwischen 1,5 und 30 µm, insbesondere zwischen 2 und 25 µm, vorzugsweise zwischen 3 und 20 µm betragen. Unterhalb der Mindestgrenze kann kein ausreichender kathodischer Korrosionsschutz gewährleistet werden und oberhalb der Höchstgrenze können Fügeprobleme beim Verbinden des erfindungsgemäßen Stahlblechs respektive eines daraus gefertigten Bauteils mit einem anderen Bauteil auftreten, insbesondere kann bei Überschreiten der Dicke des Überzugs angegebene Höchstgrenze kein stabiler Prozess beim thermischen Fügen bzw. Schweißen sichergestellt werden.

Sind Anteile von Magnesium und Aluminium in dem Überzug neben Zink und unvermeidbaren Verunreinigungen enthalten, ist der Überzug in der Fachwelt als Zink-Magnesium, ZM oder Zn-Al-Mg bekannt.

Bei einer bevorzugten Variante beträgt der Aluminiumgehalt im Überzug 1,1 bis 8 Gew.-%, insbesondere 1,2 bis 5 Gew.-%.

Bei einer bevorzugten Variante beträgt der Magnesiumgehalt im Überzug 1,1 bis 8 Gew.-%, insbesondere 1,2 bis 5 Gew.-%.

Der Überzug kann auch nur Zink mit geringen Aluminiumbestandteilen mit bis zu 0,3 Gew.-% neben unvermeidbaren Verunreinigungen enthalten, mit der Bezeichnung "Z" in Fachkreisen bekannt.

Als unvermeidbare Verunreinigungen können beispielsweise Elemente aus der Gruppe Silizium, Antimon, Blei, Titan, Kalzium, Mangan, Zinn, Lanthan, Cer und Chrom einzeln oder in Kombination mit in Summe bis zu 0,5 Gew.-%, insbesondere bis zu 0,3 Gew.-%, vorzugsweise bis zu 0,1 Gew.-%, bevorzugt bis zu 0,05 Gew.-% im Überzug vorhanden sein.

Das Stahlband besteht aus einem Stahlwerkstoff, welcher neben Eisen und unvermeidbaren Verunreinigungen Legierungselemente wie Kohlenstoff, Silizium, Mangan und Aluminium aufweist, wobei aber auch weitere Bestandteile einzeln oder in Kombination wie zum Beispiel Titan, Chrom enthalten sein können, je nach Verwendung und Festigkeitsklasse ausgewählt werden können. In Fachkreisen ist bekannt, welche Stahlwerkstoffe je nach Verwendung insbesondere für die Herstellung für kaltumgeformte Bauteile im Fahrzeugbau geeignet sind.

Gemäß einer bevorzugten Ausgestaltung ist das Stahlband ein Kaltband. Ein Kaltband ist ein kaltgewalztes Stahlband. Die Herstellung von Kaltbändern ist gängige Praxis.

Die Erfindung umfasst auch beliebige Kombinationen der oben beschriebenen Ausgestaltungen und Alternativen.

Näher erläutert wird die Erfindung anhand der folgenden Ausführungsbeispiele in Verbindung mit der Zeichnung.

Standardgrößen von Dressierwalzen haben eine Breite der Bearbeitungs-Oberfläche zwischen 1200 und 2200 mm und einen Durchmesser zwischen 350 und 650 mm. Diese Angaben werden im beispielhaften Programm Matlab eingetragen und anhand von Vorgaben oder durch das Programm wird eine abgewickelte Fläche in ein Pixelmuster mit n x m Pixel aufgeteilt. Jedes Pixel des Pixelmusters weist eine rechteckige Form, vorzugsweise eine quadratische Form, mit einer Seitenlänge zwischen 5 und 50 µm mit einer Auflösung bis zu p Stufen bezogen auf die Pulsenergie.

In einer praktischen Untersuchungsreihe wurden 8 verschiedene Standard-Dressierwalzen mit jeweils einer zu bearbeitenden Oberfläche respektive einer daraus abgewickelten Fläche von 2200 x 1500 mm² texturiert. Jede Dressierwalze wurde in einer Dreheinrichtung eingespannt und jeweils mit einer Drehgeschwindigkeit w als Produkt aus Pitch und Repetitionsrate konstant in Rotation versetzt. Zur Anwendung kam eine mit einem gepulsten Laser gekoppelte Optik zur Bearbeitung der Oberfläche der Dressierwalze während der Rotation. Die mit dem Laser gekoppelte Optik wurde mit einem Abstand L = 50 mm konstant zur Oberfläche parallel zur Achse der Dressierwalze mit einer Verfahrgeschwindigkeit v abhängig von Drehgeschwindigkeit, Linienabstand und Walzenumfang konstant verfahren. Die Oberfläche wurde mittels des Programms Matlab zu einer abgewickelten Fläche in ein Pixelmuster mit 88000 (n) x 60000 (m) Pixel aufgeteilt, wobei jedes Pixel des Pixelmusters eine rechteckige bzw. quadratische Form mit einer Seitenlänge von 25 µm aufwies. Das Pixelmuster wurde normalverteilt mit einer Gaußkurve nummerisch generiert und das damit generierte Pixelmuster wurde in einem Prozessrechner zur Regelung und/oder Steuerung des Lasers zur Bearbeitung der Oberfläche der Dressierwalze implementiert. Es kam ein handelsüblicher Laser Fa. IPG mit einer Repetitionsrate f von 100 kHz und einer maximalen Leistung von 300 W zur Anwendung. Über die mit dem Laser gekoppelte Optik wurde mittels Laserpulsen eine stochastische Struktur auf der jeweiligen Oberfläche der einzelnen Dressierwalze erzeugt, wobei der Laser mittels der im Prozessrechner implementierten Vorgaben gesteuert und/oder geregelt wurde. Weitere Parameter, welche zur Ansteuerung des Lasers verwendet wurden, sowie die sich daraus ergebenden Topografie-Kennwerte Ra und RPc, sind in Tabelle 1 aufgeführt. Die Steuerung des Abtrags erfolgte in allen Fällen durch entsprechende Variation der Pulsenergie in Anlehnung an die entsprechenden nummerisch generierten Pixelmuster.

Mittels konfokaler Lichtmikroskopie wurden zunächst abschnittsweise Aufnahmen der texturierten Oberfläche der Dressierwalzen gemacht und die damit erfassten Daten wurden Filteroperationen zugeführt. Mit Hilfe einer Auswertesoftware, beispielsweise MountainsMap von digital surf, konnten Topografie-Kennwerte wie Ra und RPc, welche standardmäßig in der Software unter Berücksichtigung der DIN EN 10049:2014-03 enthalten sind, ermittelt respektive ausgegeben werden.

**Tabelle 1**

| Dressierwalze | Pulsabstand [µm] | maximale Laserleistung P [W] | Laserpulsradius [µm] | Pulsdauer [µs] | Ra [µm] | RPc [1/cm] |
|---|---|---|---|---|---|---|
| 1 | 28,57 | 33 | 17 | 1 | 0,89 | 127 |
| 2 | 25 | 40 | 17 | 1 | 1,8 | 200 |
| 3 | 28,57 | 30 | 17 | 1 | 1,3 | 227 |
| 4 | 40 | 200 | 35 | 1,5 | 3,4 | 235 |
| 5 | 33,33 | 100 | 25 | 1,5 | 3,5 | 122 |
| 6 | 20 | 100 | 25 | 1,5 | 6,7 | 114 |
| 7 | 50 | 300 | 50 | 0,7 | 2,5 | 111 |
| 8 | 25 | 100 | 17 | 1 | 3,3 | 152 |

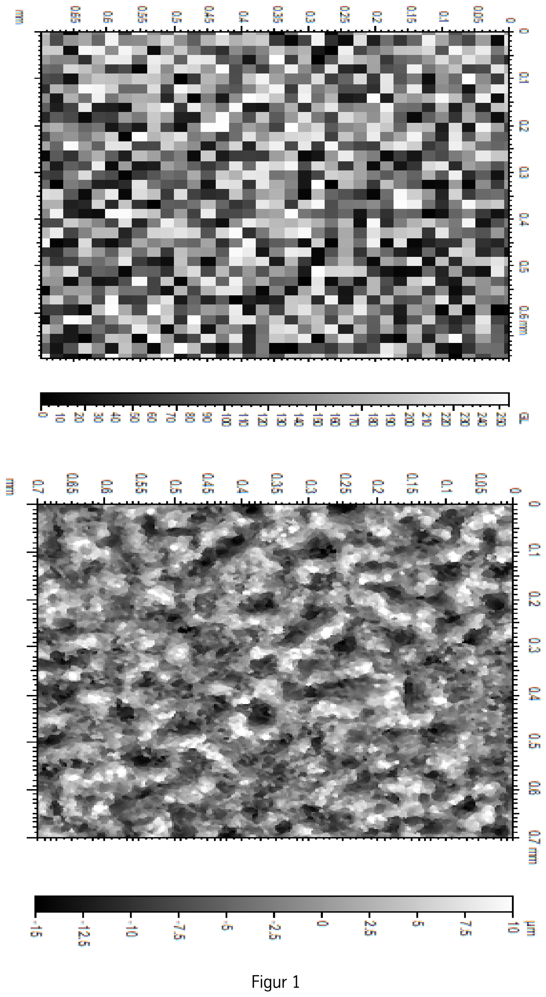

Mit den vorgenannten Einstellungen sind teilweise hohe Ra bei entsprechend hohen RPc möglich, wobei die maximale Laserleistung die maximale Pulsenergie bestimmt und diese variabel eingestellt wurde in Anlehnung an die Stufen im nummerisch generierten Pixelmuster. In **Figur** 1 ist für die Dressierwalze 5 beispielhaft eine Teilansicht links das mittels Programm Matlab nummerisch generierte Pixelmuster, mit einer normalverteilten Tiefenverteilung und einer Gaußkurve, und rechts die mittels MountainsMap ausgewertete Aufnahme dargestellt, nach Laserbearbeitung und unter Vorgabe des dargestellten Pixelmusters. Die in diesem Fall gezeigte Teilansicht des Pixelmusters entsprach einer quadratischen Form mit einer Fläche von 0,7 x 0,7 mm². Jedes Pixel war quadratisch und wies eine Seitenlänge von 25 µm auf. Es wurde eine Auflösung von 8 bit, mithin 256 Stufen gewählt bezogen auf die (maximale) Pulsenergie. Stufe 255 in der Figur 1 links zeigt den hellsten Punkt (weiß) auf der Skala und entspricht somit einem unbearbeiteten Bereich auf der Oberfläche der Dressierwalze mit der geringsten Pulsenergie und Stufe 0 zeigt den dunkelsten Punkt (schwarz) auf der Skala und entspricht somit einem bearbeiteten Bereich auf der Oberfläche der Dressierwalze mit der höchsten Pulsenergie. Die sich nach der Laserbearbeitung ergebende Oberfläche ist in Figur 1 rechts in der Teilansicht gezeigt, wobei durch die variierende Pulsenergie in Abhängigkeit des vorgegebenen Pixelmusters eine stochastische Struktur erzeugt werden konnte, mit Tiefen bis zu 15 µm (negativ) und Höhen bis zu 10 µm (positiv), mithin eine Rautiefe bis zu 25 µm.

## Patentansprüche

1. Verfahren zum Herstellen einer Dressierwalze, wobei die Dressierwalze in einer Dreheinrichtung eingespannt und mit einer Drehgeschwindigkeit w in Rotation versetzt wird, wobei eine zu bearbeitende Oberfläche der Dressierwalze während der Rotation über mindestens einen gepulsten Laser oder eine Optik gekoppelt mit einem gepulsten Laser mittels Laserpulsen bearbeitet wird, wobei der Laser mit einer Repetitionsrate f, mit einer maximalen Laserleistung P, mit einem Pulsradius r und einer Pulsdauer t betrieben wird, wobei die Laserpulse überlappend auf die Oberfläche gerichtet werden und dadurch einander überlappende näpfchenförmige Vertiefungen in der Oberfläche erzeugt werden, wobei die Laserpulse einen Pulsabstand d zwischen 0,6 und 1,4 eines Pulsradius r aufweisen, wobei der Laser mittels eines Prozessrechners gesteuert und/oder geregelt wird, **dadurch gekennzeichnet, dass** auf der Oberfläche der Dressierwalze eine stochastische Struktur erzeugt wird.

2. Verfahren nach Anspruch 1, wobei die zu bearbeitende Oberfläche der Dressierwalze mittels eines Programms zu einer abgewickelten Fläche in ein Pixelmuster mit n x m Pixel aufgeteilt wird, wobei jedes Pixel des Pixelmusters eine Auflösung bis zu p Stufen bezogen auf eine Pulsenergie aufweist, wobei das Pixelmuster normalverteilt mit mindestens einer Gaußkurve oder gleichverteilt nummerisch generiert wird und das damit generierte Pixelmuster in einem Prozessrechner zur Regelung und/oder Steuerung des Lasers zur Bearbeitung der Oberfläche der Dressierwalze implementiert wird.

3. Verfahren nach Anspruch 2, wobei das Pixelmuster normalverteilt mit mindestens zwei Gaußkurven nummerisch generiert wird.

4. Verfahren nach einem der vorgenannten Ansprüche, wobei eine Repetitionsrate f zwischen 10 und 8000 kHz verwendet oder eingestellt wird.

5. Verfahren nach einem der vorgenannten Ansprüche, wobei eine maximale Laserleistung P zwischen 10 und 1000 W verwendet oder eingestellt wird.

6. Verfahren nach einem der vorgenannten Ansprüche, wobei ein Pulsradius r zwischen 10 und 80 µm verwendet oder eingestellt wird.

7. Verfahren nach einem der vorgenannten Ansprüche, wobei eine Pulsdauer t zwischen 300 fs und 500 ns verwendet oder eingestellt wird.

8. Dressierwalze mit einer laserbearbeiteten stochastischen Textur auf der Oberfläche, insbesondere hergestellt nach einem der vorgenannten Ansprüche, **dadurch gekennzeichnet, dass** die Oberfläche der Dressierwalze eine Topografie mit einer arithmetischen Mittenrauheit Ra zwischen 0,8 und 8,0 µm und mit einer Spitzenzahl RPc zwischen 30 und 250 1/cm, wobei Ra und RPc nach DIN EN 10049:2014-03 ermittelt werden, aufweist.

9. Verfahren zum Dressieren eines schmelztauchbeschichteten Stahlbands, wobei das schmelztauchbeschichtete Stahlband zwischen zwei einen Dressierspalt aufweisende Dressierwalzen mit einer stochastischen Textur hindurchgeführt und dadurch dressiert wird, **dadurch gekennzeichnet, dass** mindestens eine Dressierwalze nach Anspruch 8 eingesetzt wird, und insbesondere hergestellt nach einem der Ansprüche 1 bis 7 ist.

10. Verfahren nach Anspruch 9, wobei das schmelztauchbeschichtete Stahlband einen zinkbasierten Überzug umfasst.

11. Verfahren nach Anspruch 9 oder 10, wobei das schmelztauchbeschichtete Stahlband einen Überzug enthaltend neben Zink und unvermeidbaren Verunreinigungen zusätzliche Elemente wie Aluminium und Magnesium jeweils mit einem Gehalt bis zu 8 Gew.- %.

12. Verfahren nach einem der Ansprüche 9 bis 11, wobei das Stahlband ein Kaltband ist.
